# EUROPÄISCHE PATENTANMELDUNG

(11) **EP 0 732 357 A1**
(43) Veröffentlichungstag der Anmeldung: **18.09.1996**
(21) Anmeldenummer: 96103726.4
(22) Anmeldetag: 09.03.1996
(51) Int. Cl.: C08J 9/224, C08J 9/33, C08J 11/06, C08L 25/04

(54) **Verfahren zur Herstellung von flammgeschützen, Polystyrolschaum-Recyclat enthaltenden Polystyrol-Partikelschaumstoffen**

(30) Priorität: 13.03.1995 DE 19508939
(71) Anmelder: BASF AKTIENGESELLSCHAFT, 67056 Ludwigshafen (DE)
(72) Erfinder: Steinbrecher, Horst, 67354 Römerberg (DE); Hahn, Klaus, Dr., 67281 Kirchheim (DE); Back, Wolf-Dieter, Dr., 67434 Neustadt (DE); Scherzer, Dietrich, Dr., 67433 Neustadt (DE)

(57) **Zusammenfassung**

Die Erfindung betrifft ein Verfahren zur Herstellung von flammgeschützten, Regenerat enthaltenden Polystyrolpartikelschaumstoffen, dadurch gekennzeichnet, daß zerkleinertes Polystyrolschaumstoffrecyclat mit mindestens einem Flammschutzmittel beschichtet und gemeinsam mit frisch hergestelltem, vorgeschäumtem Polystyrolpartikeln zu Formkörpern verschweißt wird, sowie nach diesem Verfahren hergestellte Produkte.

## Beschreibung

Die Erfindung betrifft ein Verfahren zur Herstellung von flammgeschützten, Polystyrolschaum-Recyclat enthaltenden Polystyrol-Partikelschaumstoffen, sowie nach diesem Verfahren hergestellte Produkte.

Kunststoffe, die auf Styrol und styrolhaltigen Copolymerisaten basieren, werden in großer Menge produziert und in vielen Bereichen der Technik eingesetzt. Eine große Bedeutung haben hierbei auch geschäumte Produkte.

Die Herstellung und Anwendung dieser Produkte ist seit langem bekannt und vielfach beschrieben.

In jüngerer Zeit erlangte das Recycling von Altkunststoffen zunehmend an Bedeutung.

Im Falle von Polystyrolschaumstoffen sind hierbei verschiedene Verfahren bekannt.

So ist es möglich, das gebrauchte Polystyrol in monomerem Styrol zu lösen und diese Lösung nach bekanntem Verfahren wieder zu polymerisieren. Derartige Verfahren sind beispielsweise in US-A-5,269,948 oder JP-A-56-60096 beschrieben.

Eine weitere Möglichkeit besteht darin, Abfälle von Polystyrolschaumstoffen oder ungeschäumtem Polystyrol zur Herstellung von Polystyrolschaumstoffen nach dem Extrusionsverfahren einzusetzen.

Hierbei kann das Recyclat sowohl allein als auch im Gemisch mit frischem Polystyrol eingesetzt werden.

Weiterhin ist es bekannt, gemahlene Polystyrolschaumabfälle zu einem hohen Anteil (bis zu 70 Gew.-%) in Abmischung mit frisch hergestellten, vorgeschäumten Polystyrolpartikeln zu Formteilen zu verarbeiten.

Nach diesem Verfahren konnten bei Verwendung von Polystyrolschaumrecyclaten aus nicht flammfest eingestellten Polystyrolschäumen, insbesondere Verpackungsabfällen, bislang keine flammgeschützten Polystyrolschaumstoffteile, wie sie für die Anwendung im Bauwesen, beispielsweise für Wärmeisolierung in Gebäuden oder für die Trittschalldämmung eingesetzt werden müssen, erhalten werden.

Aus DE-A-42 40 109 ist bekannt, zur Lösung dieses Problems Abfälle aus Polystyrolpartikelschaum gemeinsam mit einem feinteiligen Styrolpolymerisat, das ein Flammschutzmittel sowohl in homogener Verteilung als auch als Oberflächenbeschichtung enthält, zu Formteilen zu verschweißen, die die für den Einsatz im Bauwesen notwendige Flammwidrigkeit aufweisen.

Hierbei ist jedoch die Bereitstellung von speziell ausgerüsteten expandierbaren Styrolpolymerisaten nötig, was sehr umständlich ist und eine zusätzliche Lagerhaltung erfordert.

Aufgabe der Erfindung war es, flammgeschützte, Recyclat enthaltende Polystyrolpartikelschaumstoffe bereitzustellen, die einfach und ohne großen Aufwand herzustellen sind.

Die Aufgabe wurde überraschenderweise dadurch gelöst, daß die gemahlenen Polystyrolschaumpartikel mit einer Beschichtung aus mindestens einem Flammschutzmittel versehen und danach gemeinsam mit frisch hergestellten, vorgeschäumten Polystyrolpartikeln zu Formteilen verarbeitet werden.

Gegenstand der Erfindung sind demnach Recyclat enthaltende, flammgeschützte Polystyrolpartikelschaumstoffe, die hergestellt werden durch Beschichten von zerkleinerten Polystyrolschaumstoffen mit Flammschutzmitteln und deren Verarbeitung gemeinsam mit frisch hergestellten, vorgeschäumten Polystyrolpartikeln zu Formteilen.

Der Gehalt an Polystyrolschaumstoffrecyclat beträgt bei den erfindungsgemäßen Produkten bis zu 70 Gew.-%, vorzugsweise bis zu 50 Gew.-%, bezogen auf das Gesamtgewicht des Formkörpers. Bei Verwendung größerer Mengen an Recyclat kann es zu einer Verschlechterung der Eigenschaften der Formkörper kommen.

Zur Herstellung der erfindungsgemäßen Polystyrolschaumstoffe wird das Polystyrolschaumstoffrecyclat, zumeist Verpackungsabfälle aus Polystyrolpartikelschaum, zunächst zerkleinert, zumeist durch mahlen. Für den erfindungsgemäßen Zweck wird eine durchschnittliche Korngröße von 3 mm bevorzugt. Danach erfolgt die Beschichtung der Schaumpartikel mit dem Flammschutzmittel. Die Beschichtung wird vorzugsweise in Trommel- oder Schaufelmischern durchgeführt, wie sie üblicherweise für die Beschichtung von expandierbaren Styrolpolymerisaten eingesetzt werden. Die Menge an Beschichtungsmittel beträgt vorzugsweise 0,3 bis 4,0 Gew.-%. Bei geringeren Mengen ist die flammschützende Wirkung zu gering, bei Einsatz höherer Mengen kann die Verschweißung der Schaumpartikel zu Formkörpern beeinträchtigt werden. Als Flammschutzmittel können die üblichen und bekannten Verbindungen eingesetzt werden, beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl, Dicumylperoxid und hochzersetzliche organische Peroxide. Vorzugsweise werden halogenhaltige, insbesondere bromhaltige Verbindungen eingesetzt. Ein häufig eingesetztes bromhaltiges Flammschutzmittel ist das Hexabromcyclododekan (HBCD). Bei der Verwendung von halogenhaltigen Flammschutzmitteln ist es üblich, einen Synergisten, vorzugsweise Dicumyl oder Dicumylperoxid, zuzusetzen.

Als frisch hergestellte, vorgeschäumte Polystyrolpartikel werden übliche, aus expandierbaren Styrolpolymerisaten bestehende vorgeschäumte Partikel, vorzugsweise jedoch solche aus flammgeschütztem expandierbarem Polystyrol eingesetzt.

Die Herstellung der expandierbaren Styrolpolymerisate erfolgt durch Polymerisation vinylgruppenhaltiger Monomere, insbesondere Styrol. Es können jedoch auch Mischungen von Styrol mit anderen vinylgruppenhaltigen Monomeren eingesetzt werden.

Diese Mischungen haben vorteilhafterweise einen Styrolgehalt von mindestens 50 Gew.-% Styrol. Als andere vinylgruppenhaltige Monomere werden beispielsweise Acrylnitril, Methylstyrol, kernhalogenierte oder kernalkylierte Styrole, Ester der Acrylsäure oder Methacrylsäure von Alkoholen mit bis zu 8 Kohlenstoffatomen, N-Vinylverbindungen, wie Vinylcarbazol, oder auch geringe Mengen an Verbindungen, die zwei polymerisierbare Doppelbindungen enthalten, wie Butadien, Divinylbenzol oder Butadiendiacrylat.

Die Styrolpolymerisate können auch übliche Zusätze an anderen Stoffen enthalten, die den expandierbaren Produkten bestimmte Eigenschaften verleihen, beispielsweise Antistatika, Stabilisatoren, Farbstoffe, Schmiermittel, Füllstoffe und beim Verschäumen antiverklebend wirkende Stoffe, wie Zinkstearat, Melaminformaldhydkondensate oder Kieselsäure, sowie Mittel zur Verkürzung der Entformzeit beim Ausschäumen, wie Glycerinester oder Hydroxycarbonsäureester. Die Zusatzstoffe können je nach der beabsichtigten Wirkung in den Teilchen homogen verteilt oder als Oberflächenbeschichtung vorliegen.

Die Polymerisation erfolgt zumeist nach dem Suspensionspolymerisationsverfahren. Dazu werden die Monomeren in eine wäßrige Suspension überführt und in dieser polymerisiert. Das Treibmittel kann dabei bereits während der Polymerisation oder in einem nachfolgenden Verfahrensschritt zugesetzt werden.

Im Anschluß an die Polymerisation werden die Polymerisatperlen wie üblich durch Trocknung, Siebung und Beschichtung aufgearbeitet.

Zur Herstellung der Formkörper werden die mit dem Treibmittel imprägnierten Perlen zunächst in einem Vorschäumer vorgeschäumt und in dieser Form gemeinsam mit dem Recyclat zu Formkörpern verarbeitet.

Die Herstellung der erfindungsgemäßen Formkörper erfolgt durch übliches Verschweißen der expandierten Polystyrolpartikel und der Partikel aus Polystyrolschaumstoffrecyclat in nicht gasdicht schließenden Formen durch Erhitzen, wobei als Wärmeübertragungsmedium zumeist Wasserdampf verwendet wird.

Eine ausführliche Beschreibung der Polymerisation, der Aufarbeitung und der Verschäumung findet sich beispielsweise im Kunststoffhandbuch, Band 5, Polystyrol, herausgegeben von R. Vieweg und G. Daumiller, Carl-Hanser-Verlag München, 1969.

Überraschenderweise gelang es bei der Beschichtung der Polystyrolschaumstoffrecyclate mit dem Flammschutzmittel, soviel Beschichtungsmittel aufzubringen, daß eine flammschützende Wirkung erzielt werden konnte. Der Fachmann mußte hier erwarten, daß auf Grund der geringen äußeren Oberfläche dieser Partikel eine Beschichtung nicht im erforderlichen Maße möglich sein würde. Es kam auch zu keiner Beeinträchtigung der Verschweißung der so ausgerüsteten Partikel mit den expandierten Polystyrolpartikeln oder zu Nachteilen bei den mechanischen Eigenschaften der so hergestellten Formkörper.

Die nach dem erfindungsgemäßen Verfahren hergestellten Formkörper werden vorzugsweise im Bauwesen eingesetzt, beispielsweise zur Wärmedämmung oder Trittschalldämmung. Sie stehen in ihren Eigenschaften solchen Formkörpern, die ausschließlich aus frischem Produkt hergestellt wurden, nicht nach.

Die erfindungsgemäßen Produkte erfüllen die B2-Brandprüfung nach DIN 4102.

Die Erfindung soll an nachstehenden Beispielen näher erläutert werden:

### Beispiele 1 bis 3

300 g durch Mahlen auf eine durchschnittliche Korngröße von 2 bis 4 mm zerkleinerter Polystyrolschaumstoff aus gebrauchten Verpackungsmitteln wurde in einem Schaufelmischer vom Typ Lödige mit den in der Tabelle aufgeführten Mengen einer Beschichtungsmischung aus 5 Gewichtsteilen Hexabromcyclododecan und 1 Gewichtsteil Dicumyl versehen. Die Verweilzeit im Mischer betrug 15 Minuten.

Danach wurden die Schaumstoffpartikel mit 300 g eines flammgeschützten, perlförmigen vorgeschäumten Polystyrol vom Typ Styropor® F 14 der BASF AG mit einer durchschnittlichen Perlgröße von 3 mm, in einem Formteilautomat vom Typ ELAB mittels Wasserdampf zu einem Formteil verschäumt.

An diesem Formteil wurde die B2-Brandprüfung gemäß DIN 4102 durchgeführt.

### Beispiel 4 (Vergleich)

Es wurde verfahren wie in den Beispielen 1 bis 3, jedoch wurde der zerkleinerte Polystyrolschaumstoff aus gebrauchten Verpackungsmitteln nicht beschichtet.

Die genauen Mengenverhältnisse und die Ergebnisse der B2-Brandprüfung gemäß DIN 4102 sind in der Tabelle angegeben.

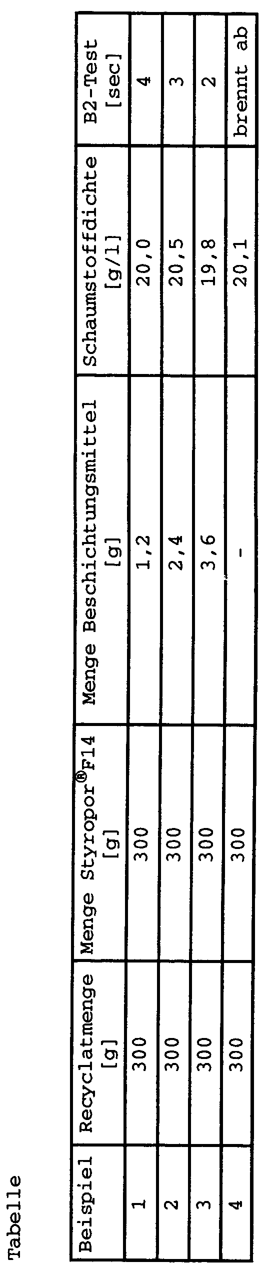

## Patentansprüche

1. Verfahren zur Herstellung von flammgeschützten, Regenerat enthaltenden Polystyrolpartikelschaumstoffen, dadurch gekennzeichnet, daß zerkleinertes Polystyrolschaumstoffrecyclat mit mindestens einem Flammschutzmittel beschichtet und gemeinsam mit frisch hergestellten, vorgeschäumten Polystyrolpartikeln zu Formkörpern verschweißt wird.

2. Verfahren nach Anspruch 1, dadurch gekennzeichnet, daß der Anteil an zerkleinertem Polystyrolschaumstoffrecyclat höchstens 70 Gew.-%, bezogen auf die Polystyrolpartikelschaumstoffe, beträgt.

3. Verfahren nach Anspruch 1 oder 2, dadurch gekennzeichnet, daß der Anteil an zerkleinertem Polystyrolschaumstoffrecyclat höchstens 50 Gew.-%, bezogen auf die Polystyrolpartikelschaumstoffe, beträgt.

4. Verfahren nach einem der Ansprüche 1 bis 3, dadurch gekennzeichnet, daß auf das zerkleinerte Polystyrolschaumstoffrecyclat eine Menge an Flammschutzmittel von 0,3 bis 4 Gew.-%, bezogen auf das Gewicht des Polystyrolschaumstoffrecyclats, aufgebracht wird.

5. Verfahren nach einem der Ansprüche 1 bis 4, dadurch gekennzeichnet, daß als Flammschutzmittel bromhaltige Flammschutzmittel eingesetzt werden.

6. Verfahren nach einem der Ansprüche 1 bis 5, dadurch gekennzeichnet, daß als bromhaltiges Flammschutzmittel Hexabromcryclododekan eingesetzt wird.

7. Verfahren nach einem der Ansprüche 1 bis 6, dadurch gekennzeichnet, daß das Hexabromcyclododekan gemeinsam mit einem Synergisten eingesetzt wird.

8. Verfahren nach einem der Ansprüche 1 bis 7, dadurch gekennzeichnet, daß als Synergisten Dicumyl und/oder Dicumylperoxid eingesetzt werden.

9. Verfahren nach einem der Ansprüche 1 bis 8, dadurch gekennzeichnet, daß als frisch hergestellte, vorgeschäumte Polystyrolpartikel flammfest eingestellte Produkte eingesetzt werden.

10. Polystyrolpartikelschaumstoffe, hergestellt nach einem der Ansprüche 1 bis 9.

11. Formkörper, hergestellt aus Partikelschaumstoffen nach Anspruch 10.
